# FASCICULE DE BREVET EUROPEEN

(11) **EP 1 235 999 B1**
(45) Date de publication et mention de la délivrance du brevet: **09.03.2005**
(21) Numéro de dépôt: 00990041.6
(22) Date de dépôt: 08.12.2000
(51) Int. Cl.: F16J 15/14, F16B 33/00, B64D 37/02, B65D 69/00

(54) **SUPPORT DE STOCKAGE, DE TRANSPORT ET D'UTILISATION DE DISPOSITIFS D'APPLICATION D'UN MASTIC D'ETANCHEITE ET SES UTILISATIONS**
TRÄGERSYSTEM FÜR DIE SPEICHERUNG, DEN TRANSPORT UND DIE VERWENDUNG VON VORRICHTUNGEN ZUM AUFTRAGEN EINER DICHTUNGSMASSE UND DESSEN VERWENDUNGEN
SUPPORT FOR STORING, TRANSPORTING AND USING DEVICES APPLYING A SEALING COMPOUND AND USES THEREOF

(30) Priorité: 09.12.1999 FR 9915566
(43) Date de publication de la demande: 04.09.2002
(73) Titulaire: LE JOINT FRANCAIS, 75008 Paris (FR)
(72) Inventeur: BEYSSAC, Georges, F-92100 Boulogne Billancourt (FR); DECREUSE, Jacky, F-95130 le Plessis Bouchard (FR)
(74) Mandataire: Corizzi, Valérie
(86) Numéro de dépôt international: PCT/FR2000/003453
(87) Numéro de publication internationale: WO 2001/042689

(56) Documents cités:
- DE-A- 3 046 291
- GB-A- 2 064 680
- GB-A- 2 163 817
- US-A- 4 519 974
- US-A- 4 923 348

## Description

La présente Invention se rapporte à un support de stockage, de transport et d'utilisation de dispositifs d'application d'un mastic d'étanchéité sur un élément en saillie sur une surface, ainsi qu'aux utilisations de ce support.

Dans l'industrie aéronautique, l'assemblage des tôles destinées à former les parois de structures étanches aux fluides comme les réservoirs de carburants ou le fuselage, est très largement réalisé au moyen d'éléments de liaison rigide du type rivets, boulons ou analogues, qui traversent, dans toute leur épaisseur, les tôles dont ils assurent l'assemblage.

En dépit des efforts d'ajustage accomplis pour réduire les espaces résiduels susceptibles d'exister entre les différentes pièces de ces éléments de liaison ainsi qu'entre ces derniers et les parois des trous dans lesquels ils sont logés, il persiste toujours un risque de fuite de fluide à leur niveau.

Pour supprimer ce risque, on réalise une étanchéité en appliquant, sur la partie des éléments de liaison qui fait saillie à la surface de la tôle destinée à être en contact avec le ou les fluides, ainsi que sur la partie de la tôle adjacente à ces éléments, un mastic semi-liquide ou pâteux, apte à former, après durcissement à l'air ambiant, une barrière étanche et résistante aux fluides.

Usuellement, l'application d'un mastic en vue de réaliser une étanchéité au niveau d'éléments de liaison, ainsi que sur la partie de tôle située autour de ces éléments de liaison, est effectuée manuellement au pinceau. Aussi, compte tenu du très grand nombre d'éléments de liaison utilisé dans la construction aéronautique, la réalisation d'une étanchéité au niveau de ces éléments est-elle grande consommatrice de temps. Elle est également grande consommatrice de mastic, dans la mesure où les ouvriers qui ont en charge de procéder à cette étanchéité, ont tendance par sécurité à appliquer des quantités de mastic plus importantes que celles réellement nécessaires pour obtenir une étanchéité satisfaisante. Or, outre le surcoût financier que cela représente, tout excès de matière se traduit par une charge pondérale inutile, alors que l'industrie aéronautique cherche constamment à réduire au maximum le poids des avions. Enfin, une telle application au pinceau ne permet pas d'assurer une régularité dans le dépôt du mastic, notamment d'un élément de liaison à l'autre, propre à garantir une qualité constante de l'étanchéité ainsi réalisée.

De ce fait, il a été proposé, dans la demande de Brevet Britannique n° 2 163 817, d'utiliser des dispositifs prêts à l'emploi qui se présentent sous la forme d'un réceptacle en forme de cloche prérempli d'une quantité déterminée d'un mastic, ces dispositifs étant congelés pour leur stockage puis décongelés pour leur utilisation. Ainsi, pour appliquer un mastic d'étanchéité au moyen de ces dispositifs, il suffit de les soumettre à une décongélation, en les laissant par exemple à température ambiante pendant quelques minutes, de manière à ce que le mastic recouvre ses propriétés et, notamment la consistance d'un mastic frais, puis d'appliquer lesdits dispositifs sur les éléments que l'on souhaite enduire de mastic.

Fabriquer de tels dispositifs, puis les remplir d'une quantité déterminée de mastic s'avère souvent peu pratique et coûteux en temps, notamment si l'on souhaite les produire en grande série. Le transport et le stockage en vrac de ces dispositifs sont également relativement coûteux, dans la mesure où le volume occupé par les dispositifs n'est pas optimisé, et peu aisés à mettre en oeuvre, compte tenu du risque de voir le mastic s'échapper des dispositifs en cas de décongélation intempestive. Enfin, à l'usage, ils ne sont pas simples à manipuler, ce qui peut assez vite s'avérer nuisible à la rentabilité exigée compte tenu du nombre conséquent de dispositifs similaires qu'ils convient en général d'installer sur une carlingue d'avion.

L'invention a notamment pour but d'apporter une solution à ces problèmes.

Le document US-4,923,348 décrit un capuchon de protection pour tête de vis comprenant une couche intermédiaire en caoutchouc non vulcanisé protégé sur une face par une couche de renfort en non-tissé et sur l'autre face par une couche autocollante en polyéthylène.

Le document US-4,519,974 décrit un dispositif permettant d'appliquer un mastic sur un élément de liaison du type rivet ou boulon se présentant sous la forme d'un capuchon.

A cet effet, l'invention concerne un support de stockage, de transport et d'utilisation de dispositifs permettant d'appliquer un mastic d'étanchéité sur un élément en saillie sur une surface, ce support étant caractérisé en ce qu'il comprend une pluralité de ces dispositifs portée par une embase sensiblement plane et dont ces derniers sont détachables, et en ce que chaque dispositif comprend un capuchon destiné à coiffer totalement ledit élément et contenant une quantité prédéterminée dudit mastic à l'état congelé, les capuchons et l'embase qui les porte formant une structure d'une seul tenant et étant constitués d'un même matériau élastomère réticulé.

Selon une modalité préférée de cette disposition, les capuchons des dispositifs d'application d'un mastic d'étanchéité et l'embase sont reliés par des ponts de ce matériau aptes à se rompre sous l'effet d'une pression manuelle ou de tout équipement adéquate.

Selon un mode de réalisation préféré du support conforme à l'Invention, ce support est obtenu par moulage et se présente sous la forme d'une plaque, sur une surface de laquelle les capuchons des dispositifs font saillie.

La plaque est conçue de manière à ce que chaque dispositif soit détachable en exerçant une simple pression sur la tête des capuchons des dispositifs.

A cet effet, chaque capuchon est relié à la plaque par une zone fragilisée et sécable qui l'entoure et qui est obtenue par une diminution de l'épaisseur de la plaque autour du capuchon et par la présence de découpes dans l'épaisseur réduite pour que le capuchon ne soit relié à la plaque que par des ponts de matière aptes à se rompre sous l'effet d'une pression manuelle ou de tout équipement adéquate.

Avantageusement, chaque zone fragilisée et sécable qui entoure un capuchon, est elle-même entourée par une nervure circulaire de renforcement qui permet d'éviter un déchirement prématuré desdites zones fragilisées et sécables au cours du démoulage.

Conformément à l'invention, les capuchons du support comprennent avantageusement un corps de forme sensiblement cylindrique ou tronconique, dont les faces interne et externe peuvent, en section droite, indépendamment l'une de l'autre, présenter une forme circulaire ou polygonale, et qui est fermé par une tête.

D'une manière générale, la conformation de la face interne du corps des capuchons est adaptée à la forme de l'élément en saillie que ces capuchons sont destinés à coiffer. De ce fait, le corps des capuchons peuvent parfaitement avoir une face interne à section droite de même forme que celle de l'élément en saillie, tout en ayant une face externe de section droite différente.

Selon un premier mode de réalisation avantageux de l'Invention, le corps des capuchons sont un cylindre ou un tronc de cône dont les faces interne et externe présentent une section droite circulaire.

Avantageusement, la tête des capuchons est une calotte sphérique.

Conformément à l'Invention, le mastic contenu dans les capuchons se présente de préférence, lorsqu'il est à l'état congelé, sous la forme d'une noisette qui adhère au fond des capuchons en étant sensiblement coaxiale avec ce dernier. Une telle disposition présente en effet l'avantage de permettre au mastic, une fois le dispositif appliqué sur l'élément en saillie, de s'écouler sur toute la surface externe de cet élément et ce, d'une manière homogène.

Le support conforme à l'Invention est susceptible de permettre l'application de tout mastic d'étanchéité quel qu'il soit. De ce fait, le mastic présent dans les capuchons peut être choisi parmi les très nombreux mastics qui sont proposés pour réaliser une étanchéité vis-à-vis de fluides, qu'ils s'agissent de liquides ou de gaz, étant entendu que ce choix sera généralement conditionné par le type de fluides à l'égard desquels le mastic doit assurer une étanchéité et, par voie de conséquence, des propriétés de résistance aux effets de ces fluides qu'il doit présenter.

Ainsi, par exemple, dans le cas où les capuchons du support conforme à l'Invention sont destinés à être utilisés pour réaliser une étanchéité au niveau des éléments de liaison d'un réservoir de carburants ou du fuselage d'un avion, le mastic présent dans les capuchons est avantageusement un mastic à base d'un polysulfure tel que ceux commercialisés par LE JOINT FRANCAIS sous les références commerciales PR 10770, PR 1750, ..., ou, en variante, un mastic à base de polythioéther du type PR 1828 (LE JOINT FRANCAIS également) ou d'un autre polymère réticulable.

Conformément à l'Invention, les capuchons et l'embase du support sont réalisés dans un matériau à base d'un ou plusieurs élastomères, lequel ou lesquels sont avantageusement choisis en fonction de trois critères, à savoir :
- présenter vis-à-vis du mastic d'étanchéité une compatibilité propre à obtenir une adhérence satisfaisante entre ce mastic et les capuchons,
- manifester à l'égard des fluides pour lesquels l'étanchéité est recherchée des propriétés de résistance analogues à celles du mastic, afin d'éviter que les capuchons ne se dégradent au contact de ces fluides et que les produits de cette dégradation ne polluent ces derniers, et/ou posséder une résistance suffisante contre les effets des phénomènes électromagnétiques (foudre) par le choix du matériau et le dimensionnement des capuchons,
- être réticulable en un temps suffisamment court pour que la fabrication à une échelle industrielle du support conforme à l'Invention puisse se faire à une cadence satisfaisante. Dans le cadre de la présente Invention, on considère généralement comme acceptable un temps de réticulation inférieur ou égal à 10 minutes.

En pratique, les deux premiers critères pourront être le plus souvent remplis en utilisant, pour la fabrication des capuchons, le ou les mêmes élastomères que ceux entrant dans la constitution du mastic. Ainsi, par exemple, dans le cas où le mastic d'étanchéité destiné à être appliqué au moyen du support conforme à l'Invention est un mastic à base d'un polysulfure, les capuchons sont avantageusement réalisés à partir d'une composition élastomère comprenant également un polysulfure.

L'utilisation d'un tel support de dispositifs d'application d'un mastic d'étanchéité conforme à l'invention présente de nombreux avantages et notamment ceux de permettre :
- de fabriquer rapidement un grand nombre de dispositifs d'étanchéité identiques reliés à un support commun mais facilement détachables de celui-ci en vue de leur utilisation,
- de faciliter le stockage des dispositifs, notamment en superposant plusieurs supports, ainsi que leur utilisation car ils sont plus faciles à saisir que s'ils étaient disposés en vrac dans un conteneur, et plusieurs capuchons reliés à un même support sont à la disposition de l'utilisateur, et
- de réaliser, en quelques gestes simples et rapides à exécuter, une enduction par ce mastic à la fois complète, homogène et reproductible, d'éléments en saillie sur une surface ainsi que de la partie de cette surface qui entoure ces éléments.

La présente Invention a encore pour objet l'utilisation d'un support de stockage, de transport et d'utilisation de dispositifs d'application d'un mastic d'étanchéité tels que précédemment défini, pour la réalisation d'une étanchéité vis-à-vis de fluides au niveau d'éléments de liaison rigide du type rivets, boulons ou analogues.

Cette utilisation présente un intérêt tout particulier pour la fabrication de structures étanches aux fluides comme les réservoirs de carburants, que ce soit dans l'industrie aéronautique, navale, automobile ou autre.

La présente Invention a en outre pour objet l'utilisation d'un support de stockage, de transport et d'utilisation de dispositifs d'application d'un mastic d'étanchéité tels que précédemment défini, pour la protection des éléments saillants de structures contre les effets électromagnétiques comme la foudre.

Outre les dispositions qui précèdent, l'Invention comprend encore d'autres dispositions qui ressortiront du complément de description qui suit, faite à titre d'illustration de cette Invention et en référence aux dessins annexés dans lesquels :
- la Figure 1 est une vue schématique en coupe longitudinale d'un dispositif d'application d'un mastic d'étanchéité ;
- la Figure 2 est une vue schématique en plan d'un support de stockage, de transport et d'utilisation de dispositifs selon la Figure 1 ;
- la Figure 3 est une vue schématique en coupe transversale selon la ligne II-II, du support de la Figure 2 ;
- la Figure 4 est une vue schématique partielle à plus grande échelle de la Figure 3.

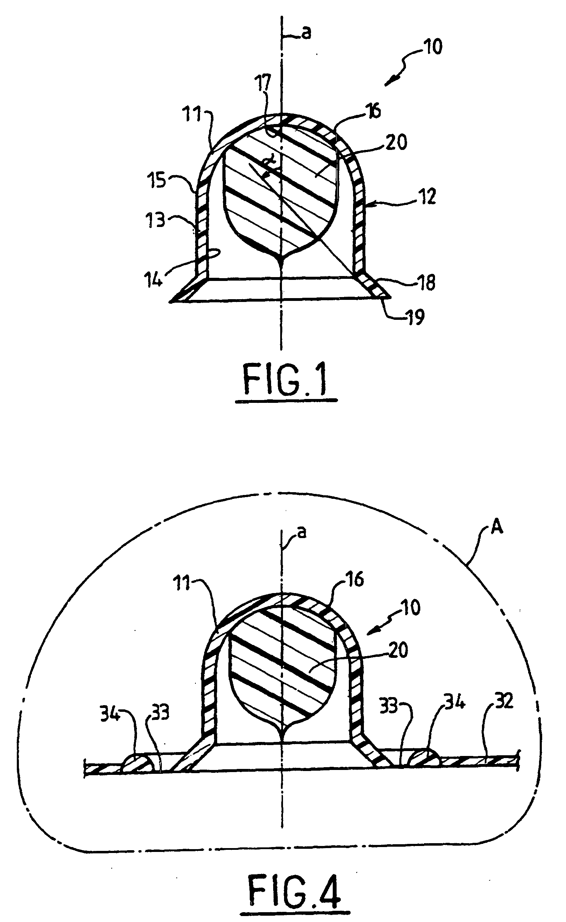

On se réfère tout d'abord à la Figure 1 qui représente schématiquement un dispositif 10 d'application d'un mastic d'étanchéité, prévu pour réaliser une étanchéité au niveau d'un élément de liaison comme un rivet ou un boulon. Sur cette Figure, ce dispositif est représenté tel qu'il se présente une fois détaché d'un support conforme à l'invention et dans la position dans laquelle il est destiné à être appliqué sur la partie en saillie de l'élément de liaison. Cette position est inverse à celle dans laquelle ledit dispositif est préférentiellement stocké et transporté et dans laquelle surtout il est mis à décongeler en vue de son utilisation.

Comme visible sur la Figure 1, le dispositif 10 comprend un capuchon 11 qui comprend lui-même un corps 12 de forme tronconique, d'axe a, qui est limité par une paroi 13 et dont les faces interne 14 et externe 15 présentent, en section droite, une forme circulaire.

Le corps 12 du capuchon 11 est fermé, au niveau de son extrémité qui présente le diamètre moyen plus faible, par une calotte sphérique 16, de même axe que lui et dont la face interne forme, dans sa partie médiane, le fond 17 du capuchon.

Au niveau de l'ouverture du corps 12 du capuchon 11 - qui correspond à l'extrémité de ce corps présentant le diamètre moyen le plus élevé -, sa paroi 13 est prolongée, sur tout le pourtour de cette extrémité, par un rebord 18 de forme annulaire qui s'étend radialement vers l'extérieur dudit corps 12 selon une direction formant avec l'axe a un angle α sensiblement égal à 45°.

Comme bien visible sur la figure 1, le rebord 18 se termine, au niveau de son extrémité opposée à celle solidaire de la paroi 13 du corps du capuchon, et sur tout le pourtour de cette extrémité, par un biseau de manière à ce que le bord libre 19 de ce rebord s'inscrive dans un plan perpendiculaire à l'axe a.

L'épaisseur du rebord 18 est la même que l'épaisseur présentée par la paroi 13 du corps 12 du capuchon 11 au niveau de l'ouverture de ce corps. Par contre, l'épaisseur de cette paroi 13 augmente progressivement en direction de la calotte sphérique 16 pour être maximale au point médian de cette dernière, c'est-à-dire le point par lequel passe l'axe a.

Comme également visible sur la Figure 1, le capuchon 11 est partiellement rempli par un mastic 20. Ce mastic est présent sous la forme d'une noisette qui adhère, lorsque le mastic est à l'état congelé, au fond 17 du capuchon 11, et qui occupe un volume sensiblement égal à la moitié du volume interne de ce dernier.

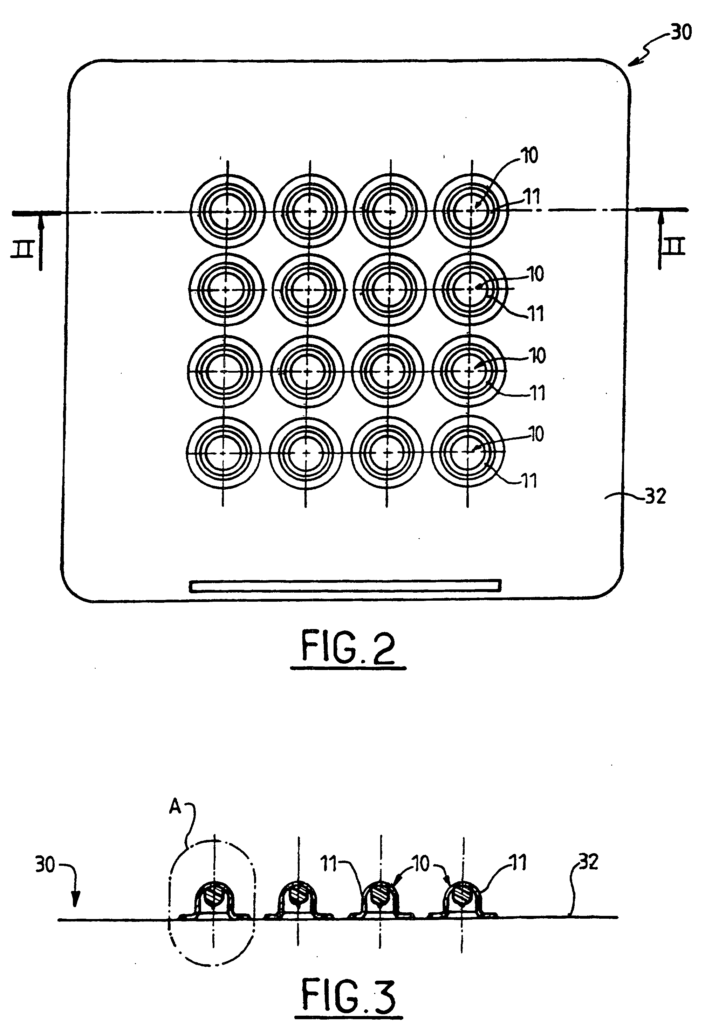

On se réfère à présent aux Figures 2 à 4 qui illustrent schématiquement un support 30 objet de la présente Invention qui est spécialement conçu pour faciliter le stockage, le transport et l'utilisation de dispositifs 10 d'application d'un mastic d'étanchéité conformes à celui décrit en relation avec la Figure 1. Sur ces Figures, le support 30 est représenté tel qu'il se présente au terme de sa fabrication jusqu'au moment de son utilisation. Par ailleurs, sur les Figures 3 et 4, le support 30 est montré dans une position qui correspond à la position d'application des dispositifs 10 sur les parties en saillie d'éléments de liaison et qui, là également, est inverse à la position dans laquelle le support 30 est lui-même stocké, transporté et utilisé.

Ainsi que le montre la Figure 2, le support 30 se présente sous la forme d'une grappe comprenant plusieurs dispositifs 10 qui sont disposés en rangées et en colonnes. Dans la forme de réalisation montrée sur la Figure 2, les dispositifs 10 sont au nombre de 16 et sont répartis en 4 rangées et 4 colonnes comprenant chacune 4 dispositifs 10.

La grappe est venue en moulage et comprend une plaque 32, typiquement d'une épaisseur de l'ordre de 0,5 mm, et les capuchons 11 des dispositifs font saillie sur une surface de cette plaque.

La plaque souple est conçue de manière à ce que chaque dispositif 10 soit détachable en exerçant une simple pression sur la calotte sphérique 16 des capuchons 11 des dispositifs 10. A cet effet, chaque capuchon 11 est relié à la plaque 32 par une zone fragilisée et sécable 33 qui entoure le capuchon.

Comme visible sur la Figure 4, cette zone 33 est obtenue par une diminution de l'épaisseur de la plaque 32 autour des capuchons 11 des dispositifs 10 et par la présence de découpes dans cette épaisseur ainsi réduite, de manière à ce que ces capuchons ne soient reliés à la plaque 32 que par des ponts de matière qui peuvent se rompre aisément sous l'effet d'une simple pression sur la calotte sphérique 16 desdits capuchons.

Comme également montré sur la Figure 4, chaque zone fragilisée et sécable 33 qui entoure un capuchon 11 est elle-même entourée par une nervure circulaire 34 de renforcement qui permet d'éviter un déchirement prématuré desdites zones fragilisées et sécables au cours du démoulage du support.

A titre d'exemple, on peut réaliser le support et les capuchons à l'aide d'un procédé comportant les étapes suivantes :
- on prépare le matériau destiné à être utilisé pour la réalisation du support et des capuchons.
- on remplit un moule dudit matériau, ce moule comportant une empreinte en creux de forme adaptée pour pouvoir réaliser en une seule fois le support et les capuchons reliés d'une seule pièce à celui-ci, à l'aide de fins ponts de matière formant des zones fragilisées et sécables,
- on chauffe le moule de telle sorte que la réticulation du matériau élastomère se produise à l'intérieur du moule,
- on démoule le support et ses capuchons une fois le matériau polymérisé,
- on remplit le fond de chaque capuchon de la quantité de mastic choisie, et
- on congèle aussitôt le support et ses capuchons ainsi remplis de mastic pour éviter que ce dernier ne polymérise, et lui permettre de conserver ainsi toutes les caractéristiques physiques d'un mastic frais.

A titre d'exemple, le matériau (mélange maître) utilisé pour réaliser le support et les capuchons pourra être à base d'un caoutchouc polysulfure mélangé à des charges inertes, telles que du noir de carbone, et à un système de réticulation, de préférence basé sur le soufre et comprenant par exemple des promoteurs de réticulations tels que l'acide stéarique et de l'oxyde de zinc, un accélérateur donneur de soufre tel que le disulfure de tétraméthylthiurame ou le tétrasulfure de dipentaméthylthiurame, et un retardateur.

Les proportions des divers constituants du mélange maître sont données à titre indicatif en parties en masse :
- Caoutchouc polysulfure : 50 à 100
- Noir de carbone : 30 à 60,
- Acide stéarique : moins de 10
- Oxyde de zinc : moins de 10
- Accélérateur : moins de 10, et
- Retardateur : moins de 10.

Il doit être bien entendu toutefois que ces exemples sont donnés uniquement à titre d'illustration de l'objet de l'Invention dont ils ne constituent en aucune manière une limitation

Ainsi, chaque zone fragilisée et sécable peut être entourée par une nervure circulaire de renfort pour éviter que les capuchons ne se détachent lors du démoulage. L'empreinte du moule est alors adaptée en conséquence pour réaliser ces nervures.

En alternative, on peut réaliser les zones sécables en dehors du moule, après le moulage du support et des capuchons, par exemple par découpage partiel à l'emporte pièce autour des capuchons. Il n'est alors pas nécessaire de prévoir une nervure circulaire de renfort.

## Revendications

1. Support (30) de stockage, de transport et d'utilisation de dispositifs (10) permettant d'appliquer un mastic d'étanchéité sur un élément en saillie sur une surface, **caractérisé en ce qu'**il comprend une pluralité de ces dispositifs portée par une embase sensiblement plane et dont ces derniers sont détachables, et **en ce que** chaque dispositif comprend un capuchon (11) destiné à coiffer totalement ledit élément et contenant une quantité prédéterminée dudit mastic (20) à l'état congelé, les capuchons (11) et l'embase qui les porte formant une structure d'un seul tenant, les capuchons (11) et l'embase qui les porte étant constitués d'un même matériau élastomère réticulé.

2. Support selon la revendication 1, **caractérisé en que** les capuchons (11) et l'embase sont reliés par des ponts de ce matériau aptes à se rompre sous l'effet d'une pression manuelle ou de tout équipement adéquate.

3. Support (30) selon l'une quelconque des revendications 1 et 2, **caractérisé en ce que** ce support est obtenu par moulage et se présente sous la forme d'une plaque (32), sur une surface de laquelle les capuchons (11) font saillie.

4. Support (30) selon la revendication 3, **caractérisé en ce que** la plaque (32) est conçue de manière à ce que chaque dispositif (10) soit détachable en exerçant une simple pression sur la tête des capuchons de ces dispositifs.

5. Support (30) selon la revendication 4, **caractérisé en ce que** chaque capuchon (11) est relié à la plaque (32) par une zone fragilisée et sécable (33) qui l'entoure et qui est obtenue par une diminution de l'épaisseur de la plaque autour du capuchon et par la présence de découpes dans l'épaisseur réduite pour que le capuchon ne soit relié à la plaque que par des ponts de matière aptes à se rompre sous l'effet d'une pression manuelle ou de tout équipement adéquate.

6. Support (30) selon la revendication 5, **caractérisé en ce que** chaque zone fragilisée et sécable (33) qui entoure un capuchon est elle-même entourée par une nervure circulaire (34) de renforcement qui permet d'éviter un déchirement prématuré desdites zones fragilisées et sécables au cours du démoulage.

7. Support (30) selon l'une quelconque des revendications précédentes **caractérisé en ce que** les capuchons (11) comprennent avantageusement un corps (12) de forme sensiblement cylindrique ou tronconique, dont les faces interne (14) et externe (15) peuvent, en section droite, indépendamment l'une de l'autre, présenter une forme circulaire ou polygonale, et qui est fermé par une tête.

8. Support (30) selon la revendication 7, **caractérisé en ce que** la conformation de la face interne (14) du corps (12) des capuchons (11) est adaptée à la forme de l'élément en saillie que ces capuchons sont destinés à coiffer.

9. Support (30) selon la revendication 7 ou la revendication 8, **caractérisé en ce que** le corps (12) des capuchons (11) est un cylindre ou un tronc de cône dont les faces interne et externe présentent une section droite circulaire.

10. Support (30) selon l'une quelconque des revendications 7 à 9, **caractérisé en ce que** la tête des capuchons est une calotte sphérique (16).

11. Support (30) selon l'une quelconque des revendications précédentes, **caractérisé en ce que** le mastic (20) contenu dans les capuchons (11) se présente, lorsqu'il est à l'état congelé, sous la forme d'une noisette qui adhère au fond (17) des capuchons en étant sensiblement coaxiale avec ces derniers.

12. Support (30) selon l'une quelconque des revendications précédentes, **caractérisé en ce que** le mastic (20) est un mastic à base d'un polysulfure ou d'un autre polymère réticulable.

13. Support (30) selon l'une quelconque des revendications précédentes, **caractérisé en ce que** les capuchons (11) et l'embase sont réalisés dans un matériau à base d'un ou plusieurs élastomères.

14. Utilisation d'une support selon l'une quelconque des revendications 1 à 13, pour la réalisation d'une étanchéité vis-à-vis des fluides au niveau d'éléments de liaison rigide du type rivets, boulons ou analogues.

15. Utilisation selon la revendication 14 pour la fabrication de structures étanches aux fluides comme les réservoirs de carburants, que ce soit dans l'industrie aéronautique, navale, automobile ou autre.

16. Utilisation d'un support selon l'une quelconque des revendications 1 à 13, pour la protection des éléments saillants de structure contre les effets électromagnétiques comme la foudre.

## Patentansprüche

1. Träger (30) für Speicherung, Transport und Verwendung von Vorrichtungen (10) zur Aufbringung einer Dichtungsmasse auf ein auf einer Fläche hervorstehendes Bauteil, **dadurch gekennzeichnet, dass** er eine Vielzahl dieser von einer im Wesentlichen planen Fußplatte getragenen Vorrichtungen aufweist, von welcher diese letzteren lösbar ausgebildet sind, und dass jede Vorrichtung eine Kappe (11) aufweist, die dazu vorgesehen ist, das Bauteil vollständig zu überdecken, und die eine vorher festgelegte Menge der Masse (20) im erstarrten Zustand enthält, wobei die Kappen (11) und die sie tragende Fußplatte einen einstückigen Aufbau bilden, wobei die Kappen (11) und die sie tragende Fußplatte aus einem gleichen vernetzten Elastomerwerkstoff bestehen.

2. Träger nach Anspruch 1, **dadurch gekennzeichnet, dass** die Kappen (11) und die Fußplatte über Brücken dieses Werkstoffs verbunden sind, welche unter der Wirkung eines manuellen Drucks oder jeder zweckentsprechenden Ausrüstung auseinanderbrechbar ausgebildet sind.

3. Träger (30) nach einem der Ansprüche 1 und 2, **dadurch gekennzeichnet, dass** dieser Träger durch Formung hergestellt und in der Gestalt einer Platte (32) ausgebildet ist, auf deren einer Fläche die Kappen (11) hervorstehen.

4. Träger (30) nach Anspruch 3, **dadurch gekennzeichnet, dass** die Platte (32) so ausgestaltet ist, dass jede Vorrichtung (10) durch Ausübung eines einfachen Drucks auf den Kopf der Kappen dieser Vorrichtungen lösbar ist.

5. Träger (30) nach Anspruch 4, **dadurch gekennzeichnet, dass** jede Kappe (11) mit der Platte (32) über einen zerbrechbar ausgebildeten und teilbaren Bereich (33), welcher sie umgibt und welcher durch eine Verminderung der Dicke bzw. Stärke der Platte um die Kappe herum ausgebildet ist, und über vorgesehene Einschnitte in der verminderten Stärke so verbunden ist, dass sie mit der Platte nur über die unter der Wirkung eines manuellen Drucks oder jeder zweckentsprechenden Ausrüstung auseinanderbrechbaren Werkstoffbrücken verbunden ist.

6. Träger (30) nach Anspruch 5, **dadurch gekennzeichnet, dass** jeder zerbrechbar ausgebildete und teilbare Bereich (33), welcher eine Kappe umgibt, selbst von einer kreisförmigen Verstärkungsrippe (34) umgeben ist, die ein vorzeitiges Zerbrechen der zerbrechbar ausgebildeten und teilbaren Bereiche im Verlauf der Entformung verhindert.

7. Träger (30) nach einem der vorhergehenden Ansprüche, **dadurch gekennzeichnet, dass** die Kappen (11) vorteilhafterweise einen Körper (12) in einer im Wesentlichen zylindrischen oder kegelstumpfartigen Form aufweisen, deren innere Flächen (14) und äußeren (15) im Querschnitt, eine unabhängig von der anderen, eine kreisförmige oder polygonale Gestalt aufweisen können, welche von einem Kopf verschlossen ist.

8. Träger (30) nach Anspruch 7, **dadurch gekennzeichnet, dass** die Formgebung der inneren Fläche (14) des Körpers (12) der Kappen (11) an die Form des hervorstehenden Bauteils angepasst ist, zu dessen Überdeckung diese Kappen vorgesehen sind.

9. Träger (30) nach Anspruch 7 oder 8, **dadurch gekennzeichnet, dass** der Körper (12) der Kappen (11) ein Zylinder oder ein Kegelstumpf ist, dessen innere und äußere Flächen einen kreisförmigen Querschnitt aufweisen.

10. Träger (30) nach einem der Ansprüche 7 bis 9, **dadurch gekennzeichnet, dass** der Kopf der Kappen als eine kugelförmige Kalotte (16) ausgebildet ist.

11. Träger (30) nach einem der vorhergehenden Ansprüche, **dadurch gekennzeichnet, dass** die in den Kappen (11) enthaltene Masse (20), wenn sie im erstarrten Zustand ist, die Gestalt einer Haselnuss aufweist, welche am Grund (17) der Kappen anhaftet, wobei sie im Wesentlichen koaxial mit den letzteren ist.

12. Träger (30) nach einem der vorhergehenden Ansprüche, **dadurch gekennzeichnet, dass** die Masse (20) eine Masse auf Grundlage eines Polysulfids oder eines anderen vemetzbaren Polymers ist.

13. Träger (30) nach einem der vorhergehenden Ansprüche, **dadurch gekennzeichnet, dass** die Kappen (11) und die Fußplatte aus einem Werkstoff auf der Grundlage von einem Elastomer oder mehreren hergestellt ist.

14. Verwendung eines Trägers nach einem der Ansprüche 1 bis 13 zur Erstellung einer Abdichtung gegenüber Fluiden auf der Höhe von starren Verbindungselementen in der Ausführung als Nieten, Bolzen oder dergleichen.

15. Verwendung nach Anspruch 14 zur Fertigung von gegenüber Fluiden dichten Aufbauten wie die Kraftstoffbehälter, die in der Luftfahrt-, Schifffahrt-, Automobilindustrie oder anderen zur Anwendung kommen.

16. Verwendung eines Trägers nach einem der Ansprüche 1 bis 13 zum Schutz der hervorstehenden Bauteile eines Aufbaus gegenüber elekromagnetischen Einwirkungen wie Blitz bzw. atmosphärische Entladungen.

## Claims

1. Support (30) for storing, transporting and using devices (10) for applying a sealing compound to an element projecting from a surface, **characterised in that** it comprises a plurality of these devices carried by a substantially flat base from which the latter can be detached, and **in that** each device comprises a cap (11) adapted to fit over the entire element and containing a predetermined amount of said compound (20) in frozen form, the caps (11) and the base that carries them forming a continuous structure, the caps (11) and the base that carries them consisting of the same cross-linked elastomeric material.

2. Support according to claim 1, **characterised in that** the caps (11) and the base are connected by bridges of this material adapted to break under the effect of manual pressure or by any suitable means.

3. Support (30) according to one of claims 1 and 2, **characterised in that** this support is obtained by moulding and is in the form of a plate (32) with the caps (11) projecting from a surface thereof.

4. Support (30) according to claim 3, **characterised in that** the plate (32) is designed so that each device (10) can be detached by applying simple pressure to the top of the caps of these devices.

5. Support (30) according to claim 4, **characterised in that** each cap (11) is connected to the plate (32) by a frangible break-off zone (33) which surrounds it and is obtained by reducing the thickness of the plate around the cap and by the presence of cut-outs in the reduced thickness so that the cap is connected to the plate only by bridges of material adapted to break under the effect of manual pressure or of any suitable means.

6. Support (30) according to claim 5, **characterised in that** each frangible break-off zone (33) which surrounds a cap is itself surrounded by a circular reinforcing rib (34) which makes it possible to avoid premature tearing off of the frangible break-off zones during removal from the mould.

7. Support (30) according to any one of the preceding claims, **characterised in that** the caps (11) advantageously comprise a substantially cylindrical or truncated cone-shaped body (12) the inner (14) and outer (15) surfaces of which, independently of one another, may have a circular or polygonal shape in cross-section and which is closed off by a top.

8. Support (30) according to claim 7, **characterised in that** the shape of the inner surface (14) of the body (12) of the caps (11) is adapted to the form of the projecting element which these caps are intended to fit over.

9. Support (30) according to claim 7 or 8, **characterised in that** the body (12) of the caps (11) is a cylinder or a truncated cone the inner and outer surfaces of which are circular in cross-section.

10. Support (30) according to any one of claims 7 to 9, **characterised in that** the top of the caps is a spherical cup (16).

11. Support (30) according to any one of the preceding claims, **characterised in that** the sealing compound (20) contained in the caps (11), when in the frozen state, is in the form of a knob which adheres to the base (17) of the caps, being substantially coaxial with said caps.

12. Support (30) according to any one of the preceding claims, **characterised in that** the sealing compound (20) is a sealing compound based on a polysulphide or another crosslinkable polymer.

13. Support (30) according to any one of the preceding claims, **characterised in that** the caps (11) and the base are made of a material based on one or more elastomers.

14. Use of a support according to any one of claims I to 13, for producing a fluid-tight seal around rigid connecting elements of the rivet or bolt type or the like.

15. Use according to claim 14 for the production of fluid-tight structures such as fuel tanks, be they in the aeronautical, naval or automobile industry or the like.

16. Use of a support according to any one of claims 1 to 13, for the protection of projecting structural elements against electromagnetic effects such as lightning.
